(19) **Europäisches Patentamt**
**European Patent Office**
**Office européen des brevets**

(11) **EP 3 572 991 A1**

(12) **EUROPEAN PATENT APPLICATION**
published in accordance with Art. 153(4) EPC

(43) Date of publication:
**27.11.2019 Bulletin 2019/48**

(21) Application number: **18823362.1**

(22) Date of filing: **14.05.2018**

(51) Int Cl.:
**G06Q 10/04** (2012.01)  **G01C 21/26** (2006.01)
**G08G 1/00** (2006.01)

(86) International application number:
**PCT/JP2018/018595**

(87) International publication number:
**WO 2019/003672 (03.01.2019 Gazette 2019/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.06.2017 JP 2017125896**

(71) Applicant: **Hitachi, Ltd.**
**Tokyo 100-8280 (JP)**

(72) Inventors:
• **TOMIYAMA, Tomoe**
**Tokyo 100-8280 (JP)**
• **YANO, Kojin**
**Tokyo 100-8280 (JP)**

(74) Representative: **Manitz Finsterwald**
**Patent- und Rechtsanwaltspartnerschaft mbB**
**Martin-Greif-Strasse 1**
**80336 München (DE)**

(54) **TRANSIT DEMAND FORECASTING DEVICE AND TRANSIT DEMAND FORECASTING METHOD**

(57) Transportation service plan information, movement demand prediction information, transportation service congestion information, and traffic congestion information are acquired. The transportation service plan information is information regarding an operation plan and operation status of transportation services operated by public transportation in a prediction target area. The movement demand prediction information is prediction information regarding movement demand between points in the prediction target area. The transportation service congestion information is information regarding a congestion degree of the transportation services. The traffic congestion information is information regarding congestion state of road traffic in the prediction target area. A route model is created which combines public transportation and road traffic between two points in the prediction target area. In the route model between a departure point and a destination point of the movement demand included in the movement demand prediction information, a moving route from the departure point to the destination point is extracted. A utility value for each moving route is calculated based on an evaluation index including the transportation service congestion information and traffic congestion information on the moving route. Based on the utility value, shared moving persons are allocated to each moving route and collected and output for each public transportation.

FIG. 8

**Description**

Technical Field

The present invention relates to a traffic demand prediction device and a traffic demand prediction method.

Background Art

This application claims priority based on Japanese Patent Application No. 2017-125896 filed on June 28, 2017, the entire disclosure of which is incorporated herein by reference.

In recent years, services have been considered which provide transportation means by public transportation including railways, route buses, and the like on demand in accordance with time-varying movement demand. In order to realize such services, it is important for transportation service providers such as railway operators and route bus companies to be able to timely understand and make available information on movement demand in a service providing area.

On the other hand, in areas such as urban areas where public transportation provide service network, there are multiple options for moving routes from one point to another, and each option is usually a combination of a plurality of types of transportation means such as railways, local buses, taxis, and private cars. Therefore, in the case where the movement demand is predicted, while taking into consideration the degree of congestion of public transportation in moving routes and the degree of traffic congestion, it is necessary to understand how the flow of moving persons is dispersed among the options constituting the moving route.

In this respect, in PTL 1, a technology is proposed that can guide a mixed route used in combination with road traffic and public transportation by comparing an expected cost when using only road traffic with an expected cost when switching to public transportation, in the case where the present location and the destination of a moving person are a zone where public transportation can be used.

Citation List

Patent Literature

PTL 1: JP 2001-124569 A

Summary of Invention

Technical Problem

However, in PTL 1, although it is possible to calculate a moving route of each moving person, congestion in public transportation and road congestion that occur due to the concentration of a number of moving persons on a specific route are not considered in the prediction. For this reason, there has been a problem that it is not possible to cope with the deviation of movement demand among a plurality of moving routes between certain two points, such as operation disruption of public transportation due to various causes such as a large event, traffic jams on roads due to traffic accidents and the like.

The present invention has been made to solve the above and other problems, and one objective of the present invention is to provide a traffic demand prediction device and a traffic demand prediction method capable of executing traffic demand prediction in a timely manner while considering demand fluctuation of each of a plurality of transportation means constituting a moving route.

Solution to Problem

According to one aspect of the present invention to achieve the above and other objects, in a traffic demand prediction method, a computer provided with a processor and a memory acquires transportation service plan information which is information regarding an operation plan and operation status of transportation services operated by public transportation in a prediction target area, movement demand prediction information which is prediction information regarding movement demand between points in the prediction target area, transportation service congestion information which is information regarding a congestion degree of the transportation services, and traffic congestion information, which is information regarding congestion state of road traffic in the prediction target area, creates a route model between two points in the prediction target area including a first route which is a route from each point to a nearest boarding point of public transportation, a second route which is a route traveling by public transportation between the nearest boarding points, and a third route which is a route connecting by means of pre-set road traffic between the above-described two points, between boarding points of public transportation included in the second route, or between any one of the two points and the boarding point of public transportation included in the second route, in the route model between a departure point and a destination point of the movement demand included in the acquired movement demand prediction information, extracts a moving route from the departure point to the destination point from a combination of the first route to the third route, for the extracted moving route, calculates a congestion degree and congestion state regarding transportation services and road traffic included in the moving route from the transportation service congestion information and traffic congestion information, calculates a utility value for each moving route based on an evaluation index including the congestion degree or traffic congestion state, and allocates the number of moving persons from the departure point to the destination point acquired from the movement demand prediction information to each moving route as the number of shared moving persons based on the utility value for the moving route, and collects and outputs the number of shared moving persons for each public transportation included in each moving route.

Advantageous Effects of Invention

According to the above-described aspect of the present invention, it is possible to timely carry out traffic demand prediction with regard to a plurality of moving means constituting a moving route, while considering temporal demand fluctuation of each.

Brief Description of Drawings

[FIG. 1] FIG. 1 is a diagram illustrating a configuration example of a traffic system 1 including a traffic demand prediction device 150 according to an embodiment of the present invention.
[FIG. 2] FIG. 2 is a diagram illustrating a configuration example of a computer 10.
[FIG. 3] FIG. 3 is a diagram illustrating a configuration example of a transportation planning device 110.
[FIG. 4] FIG. 4 is a diagram illustrating a configuration example of a movement demand prediction device 120.
[FIG. 5] FIG. 5 is a diagram illustrating a configuration example of a congestion prediction device 130.
[FIG. 6] FIG. 6 is a diagram illustrating a configuration example of a traffic congestion prediction device 140.
[FIG. 7] FIG. 7 is a diagram illustrating a configuration example of a passenger terminal device 160.
[FIG. 8] FIG. 8 is a diagram illustrating a configuration example of a traffic demand prediction device 150.
[FIG. 9] FIG. 9 is a diagram illustrating a configuration example of transportation service plan information 1000.
[FIG. 10] FIG. 10 is a diagram illustrating a configuration example of movement demand prediction information 2000.
[FIG. 11] FIG. 11 is a diagram illustrating a configuration example of transportation service congestion information 3000.
[FIG. 12] FIG. 12 is a diagram illustrating a configuration example of traffic congestion information 4000.
[FIG. 13] FIG. 13 is a diagram illustrating an example of a network model used by the traffic demand prediction device 150.
[FIG. 14] FIG. 14 is a flow chart indicating an example of a data processing flow by the traffic demand prediction device 150.
[FIG. 15] FIG. 15 is a diagram illustrating an output example of traffic demand prediction information by the traffic demand prediction device 150.
[FIG. 16] FIG. 16 is a diagram illustrating an output display example of a traffic demand prediction result by the traffic demand prediction device 150.
[FIG. 17] FIG. 17 is a diagram illustrating a configuration example of the traffic demand prediction device 150 according to another embodiment.
[FIG. 18] FIG. 18 is a flowchart indicating an example of data processing flow by a traffic demand prediction device 150 according to another embodiment.
[FIG. 19] FIG. 19 is a diagram illustrating an example of a calculation convergence operation screen applied to the data processing flow of FIG. 15.

Description of Embodiments

Hereinafter, the present invention will be described according to an embodiment thereof with reference to the attached drawings.

First Embodiment

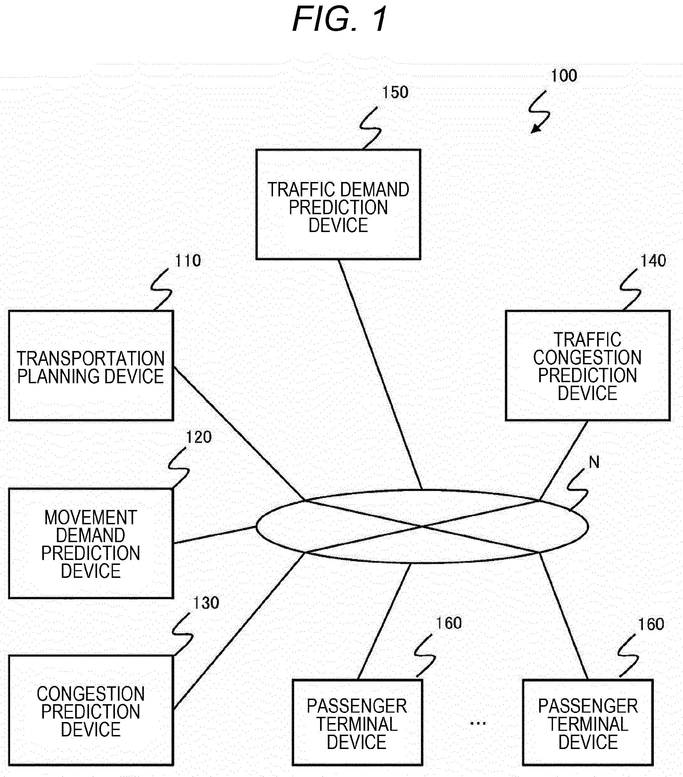

Next, a first embodiment of the present invention will be described. FIG. 1 is a block diagram illustrating the overall configuration example of a traffic information system 100 including a traffic demand prediction device 150 according to a first embodiment of the present invention. The traffic information system 100 is configured for the purpose of contributing to efficient transportation means provision such that public transportation facilities such as train operators and local bus companies provide an appropriate transportation means on demand in response to fluctuations in traffic demand in a traffic service providing area. The traffic information system 100 illustrated in FIG. 1 includes a transportation planning device 110, a movement demand prediction device 120, a congestion prediction device 130, a traffic congestion prediction device 140, a traffic demand prediction device 150, and a passenger terminal device 160, and these devices are communicably connected by a communication network N.

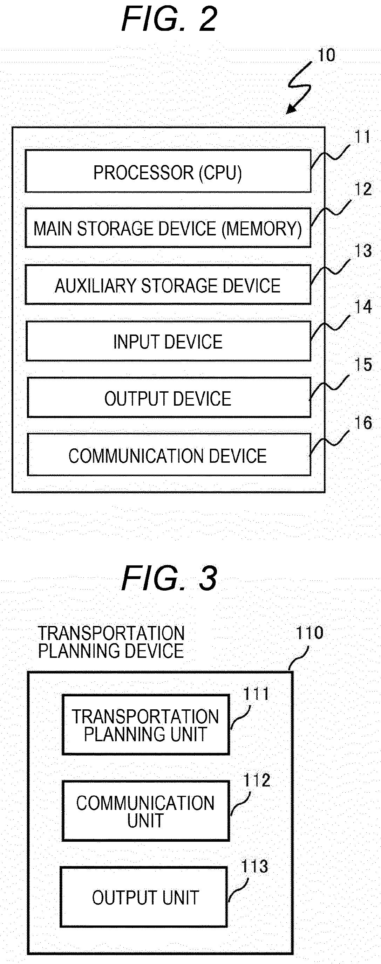

These devices can be configured as a general computer having a communication function. FIG. 2 illustrates an example of a hardware structure of a computer 10. As illustrated in FIG. 2, the computer 10 includes a main storage device 12 formed of a processor 11 such as a central processing unit (CPU) and a storage device such as a random access memory (RAM), a read only memory (ROM) and the like, an auxiliary storage device 13 such as a hard disk drive (HDD), a solid state drive (SSD) and the like, an input device 14 including such as a keyboard, a mouse, and a touch panel, an output device 15 including such as a display, a printer, and a speaker, and a communication device 16 for communicating with another computer via the communication network N.

The communication network N can be configured without particular limitation, including appropriate communication lines such as the Internet, various leased lines, mobile telephone networks, WANs, and LANs.

The traffic demand prediction device 150 illustrated in FIG. 1 receives a public transportation operation plan in the prediction target area from the transportation planning device 110, prediction information of passenger movement demand predicted in public transportation between various points in the prediction target area from the movement demand prediction device 120, congestion rate prediction information of each public transportation in operation sections within the prediction target area from the congestion prediction device 130, and traffic congestion prediction information on a road in the prediction target area from the traffic congestion prediction device 140, and the traffic demand prediction device 150 predicts passenger movement between various points in the prediction target area and provides the prediction result to public transportation facilities, road managers, and the like. As a result, it is supported that public transportation uses this prediction result to take timely measures such as operation status information for passengers and operation of extra trains and extra bus services for sections where traffic demand is increasing.

The traffic demand prediction result calculated in the traffic demand prediction device 150 can also be provided to the passenger terminal device 160. Here, the passenger terminal device 160 is assumed to be a portable terminal such as a smartphone possessed by a person who intends to move using a public transportation or the like. The traffic demand prediction device 150 can provide a passenger with a traffic demand prediction result via an appropriate application program or the like installed in the passenger terminal device 160. The passenger who has obtained this information can decide a route to his/her destination accordingly. In addition, the traffic demand prediction result may be provided to a service provider who provides a navigation service to a mobile terminal or the like. It is also possible to provide the public with the traffic demand prediction result at public transportation facilities, stations, bus terminals and the like through digital signage and the like.

Each device other than the traffic demand prediction device 150 or a device corresponding thereto is provided in facilities such as railway companies, route bus companies, road managers or the like related to traffic services in the traffic demand prediction target area or an information providing service company, a data center and the like that provides such prediction information. First, the configuration of these devices will be described below.

FIG. 3 illustrates a configuration example of the transportation planning device 110. The transportation planning device 110 is disposed, for example, in public transportation facilities such as railway companies and local bus companies, and creates and holds transportation planning information such as a train diagram and a bus operation table which are transportation planning, on the basis of, for example, required transportation amount prediction information for each unit time predicted by the movement demand prediction device 120 described later. The transportation planning device 110 includes, for example, a transportation planning unit 111 that executes the transportation planning creation processing described above, a communication unit 112 that receives information necessary for the transportation plan creation processing from an external device, and an output unit 113 that outputs the created transportation plan as train diagram information, etc. The transportation planning unit 111, the communication unit 112, and the output unit 113 can be configured as a program that operates on the computer 10 exemplified in FIG. 2. The same applies to the other devices included in the traffic information system 100 illustrated in FIG. 1.

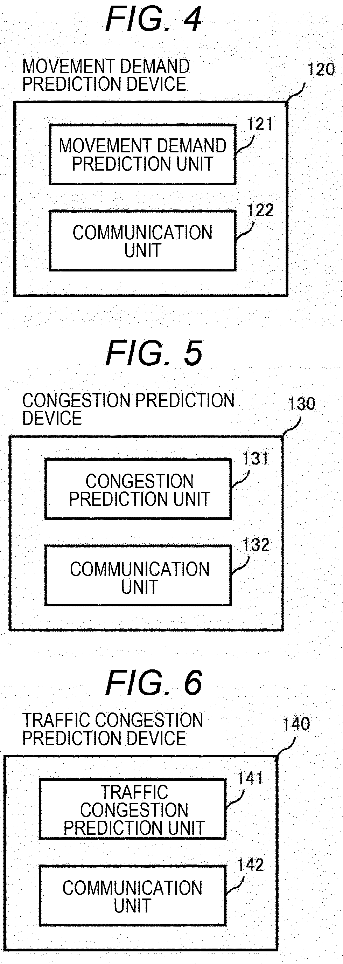

FIG. 4 illustrates a configuration example of the movement demand prediction device 120. The movement demand prediction device 120 is disposed in, for example, a public transportation facility such as a railway company or a route bus company, and calculates and holds passenger movement demand prediction information between various points in the target area on the basis of basic information such as statistical information about the amount of passenger movement, holding of events, daily weather forecast, etc. between various points in the traffic service providing area regularly held by such as the government and local governments. The movement demand prediction device 120 includes a movement demand prediction unit 121 that executes passenger movement demand prediction information generation processing on the basis of the basic information, and a communication unit 122 for transmitting the generated movement demand prediction information to an external device.

FIG. 5 illustrates a configuration example of the congestion prediction device 130. The congestion prediction device 130 is disposed, for example, in a public transportation facility such as a railway company and a local bus company and calculates and holds a congestion degree for each time of an operation section such as between stations and between stops as a numerical value such as a boarding rate, on the basis of operation plans for trains, buses, etc. created by the transportation planning device 110, and passenger movement demand prediction information generated by the movement demand prediction device 120. As will be described later, the calculation of the congestion degree is repeatedly performed by feeding back the traffic demand prediction result by the traffic demand prediction device 150. The congestion prediction device 130 includes a congestion prediction unit 131 that performs calculation of the congestion degree, and a communication unit 132 for transmitting information on the calculated congestion degree to an external device and receiving a calculation result from the traffic demand prediction device 150.

FIG. 6 illustrates a configuration example of the traffic congestion prediction device 140. The traffic congestion prediction device 140 is installed, for example, in an entity that collects and provides road traffic information, and generates and holds congestion occurrence prediction information based on traffic condition statistical information for each section, day and hour for each road in the target area. The calculation result of the traffic demand prediction device 150 is also fed back and repeatedly executed for the congestion occurrence prediction. The traffic congestion prediction device 140 includes a traffic congestion prediction unit 141 that executes generation processing of the traffic congestion prediction information and a communication unit 142 for transmitting generated traffic congestion prediction information to the external device and also receiving calculation results from the traffic demand prediction device 150.

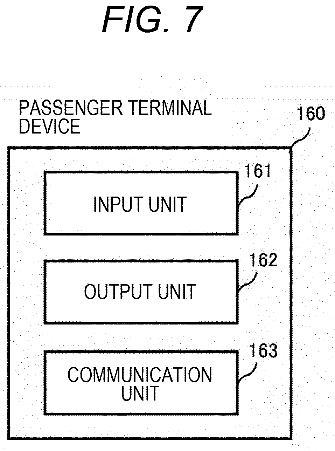

The passenger terminal device 160 is, for example, a portable terminal such as a smart phone, a tablet terminal and the like possessed by a passenger using a public transportation, and as illustrated in FIG. 7, and the passenger terminal device 160 includes an input unit 161 and an output unit 162 configured of a touch panel screen or the like, and a communication unit 163 providing a communication function with a mobile telephone communication network, the Internet or the like.

Note that, the configuration of each device illustrated in FIGS. 3 to 7 is an example, and other functional units not illustrated may be provided depending on the function required for each device. In addition, these devices may be provided as independent elements as illustrated in FIG. 1, or may be configured to combine and integrate some devices.

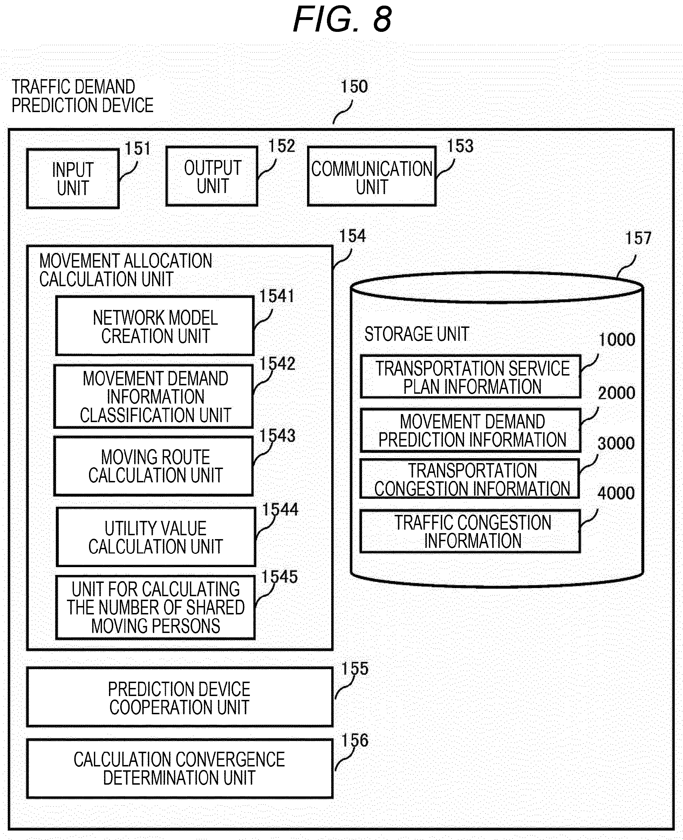

Next, the traffic demand prediction device 150 in the present embodiment will be described. FIG. 8 illustrates a configuration example of the traffic demand prediction device 150. The traffic demand prediction device 150 is typically disposed at, for example, a business establishment of a service provider who is engaged in providing traffic demand prediction information to a public transportation service provider such as a railway company, but it may be a cloud computing system on a network.

As illustrated in FIG. 8, the traffic demand prediction device 150 of the present embodiment includes an input unit 151, an output unit 152, a communication unit 153, a movement allocation calculation unit 154, a prediction device cooperation unit 155, and a storage unit 157.

The input unit 151 has a function of receiving an input from a user through an input device for inputting an instruction to a computer such as a keyboard, a mouse, and a touch panel. The output unit 152 has a function of outputting information to a user of such as an execution status and an execution result of data processing by the traffic demand prediction device 150 through an output device such as a display, a printer, and a speaker. The communication unit 153 has a function of exchanging various data and commands with other external devices via the communication network N.

The movement allocation calculation unit 154 is a program that executes data processing for calculating traffic demand prediction information, which is a main function of this device, and is provided with a plurality of sub programs described later.

The storage unit 157 is a storage area in which various data used by the traffic demand prediction device 150 to execute data processing is stored. As illustrated in FIG. 8, the storage unit 157 stores the transportation service plan information 1000, the movement demand prediction information 2000, the transportation service congestion information 3000, and the traffic congestion information 4000. Each piece of stored information will be described later.

Here, the sub program included in the movement allocation calculation unit 154 will be described. A network model creation unit 1541 reads the transportation service plan information 1000 and the movement demand prediction information 2000 stored in the storage unit 157, and creates a network model that represents a boarding point of public transportation in the target area of the traffic demand prediction device 150, a departure place and a destination of the movement demand, and a transfer between road traffic and public transportation. The basic configuration and configuration example of the network model created here will be described later.

The movement demand information classification unit 1542 reads the movement demand prediction information 2000 stored in the storage unit 157, and organizes, classifies and stores the passenger movement between points in the prediction target area according to a departure place, a destination, and a departure time zone.

The moving route calculation unit 1543 executes, for each movement demand classified by the movement demand information classification unit 1542, a process of extracting a moving route in a network model created by the network model creation unit 1541.

The utility value calculation unit 1544 calculates evaluation values such as a required time, a fare, a congestion degree, a traffic congestion degree and the like of each transportation for each movement demand classified by the movement demand information classification unit 1542, according to the departure time of each movement demand, on the basis of the transportation facility congestion information 3000 and the traffic congestion information 4000 stored in the storage unit 157, and the utility value calculation unit 1544 executes a process of calculating the utility value of the moving route on the basis of the calculated evaluation value.

On the basis of the utility value calculated by the utility value calculation unit 1544, the shared moving person calculation unit 1545 executes processing for calculating the share of the number of moving persons on the moving route for each movement demand.

The prediction device cooperation unit 155 calls the congestion prediction device 130 and the traffic congestion prediction device 140, and has a function of transmitting the number of moving persons calculated by the shared moving person calculation unit 1545 for the transportation that each prediction device is in charge of, and receiving prediction results of each device.

A calculation convergence determination unit 156 has a function of comparing the result received by the prediction device cooperation unit 155 with the traffic demand prediction result up to the previous time, and determining whether or not the traffic demand prediction calculation has converged. Here, the convergence of a calculation means an event in which the sharing of the number of moving persons on the moving route converges and stabilizes within a certain fluctuation range as a result of executing a prediction calculation. When it is determined that a calculation has not converged, the network model creation unit 1541 corrects a network model, the moving route calculation unit 1543 calculates a moving route, the shared moving person calculation unit 1545 calculates the number of moving persons, the prediction device cooperation unit 155 calls a prediction device, and the calculation convergence determination unit 156 repeatedly determines whether or not a calculation converges.

Next, a configuration of information stored in the storage unit 157 illustrated in FIG. 8 will be described.

The transportation service plan information 1000 is information that defines transportation capacity planned in advance for transportation services by public transportation such as railways, local buses, taxis, etc., and it is information that records points where passengers can get on and off, such as a station, a bus stop, and a taxi stand, and the times at which each transportation service set for the point arrives, departs, or passes. Note that, on the day of operation, the transportation service plan information 1000 includes the current operation status and the time at which the prediction of the future operation status is reflected. In other words, in the transportation service plan information 1000, information such as the disturbance of the operation time due to various causes and the recovery schedule thereof is incorporated. The transportation service plan information 1000 is calculated by the transportation planning unit 111 of the transportation planning device 110, and transmitted to the traffic demand prediction device 150 via the communication unit 112.

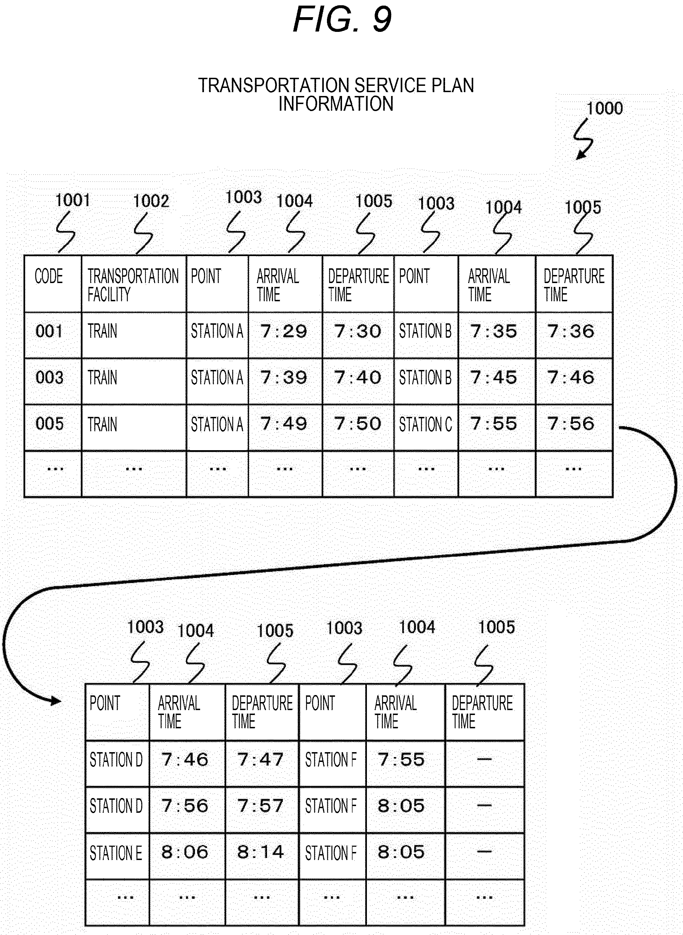

FIG. 9 illustrates a configuration example of the transportation service plan information 1000 in the present embodiment. The transportation service plan information 1000 is configured as a data table having a plurality of records. Each record includes items of a name 1001, a transportation facility 1002, a point 1003, an arrival time 1004, and a departure time 1005.

The name 1001 stores a name for uniquely identifying transportation services provided by a transportation service (public transportation facility) which is a processing target of the traffic demand prediction device 150. In the name 1001, codes such as a train number, an operation number, and a vehicle symbol can be recorded.

The transportation facility 1002 stores the type of transportation facilities to which the transportation service identified by the name 1001 belongs. The transportation facility 1002 is used to identify what transportation means the transportation service is, when presenting the transportation service as an output of the device. For example, the transportation facility 1002 can include types such as trains, route buses, taxis, and the like.

The point 1003 stores points at which the transportation service identified by the name 1001 stops or passes. For example, the point 1003 can be set to stations in the case of a railway, bus stops in the case of a route bus, points where a passenger gets on and off in the case of a reserved taxi, and major intersections and the like in the case of a taxi that has not been reserved.

The arrival time 1004 stores times when transportation services identified by the name 1001 arrive at the point 1003. When the corresponding transportation services pass the point 1003, for example, the arrival time 1004 is blank.

The departure time 1005 stores the times when transportation services identified by the name 1001 depart from or pass through the point 1003.

Hereinafter, a point, an arrival time, and a departure time for one transportation service are as one set, and data are created and stored for each point where the transportation services identified by the name 1001 stop or pass.

For example, the top record in FIG. 9 indicates that the type of transportation services specified by the name "001" is "train", the "train" arrives at 7:29 at "station A" and departs at 7:30, and then after stopping at "station B" and "station D", it arrives at 7:55 at "station F".

Next, movement demand prediction information 2000 will be described. The movement demand prediction information 2000 is information indicating a prediction value regarding the number of people who are going to move from one point in the prediction target area to another point. The movement demand prediction information 2000 is calculated by the movement demand prediction unit 121 of the movement demand prediction device 120, and is transmitted to the traffic demand prediction device 150 via the communication unit 122.

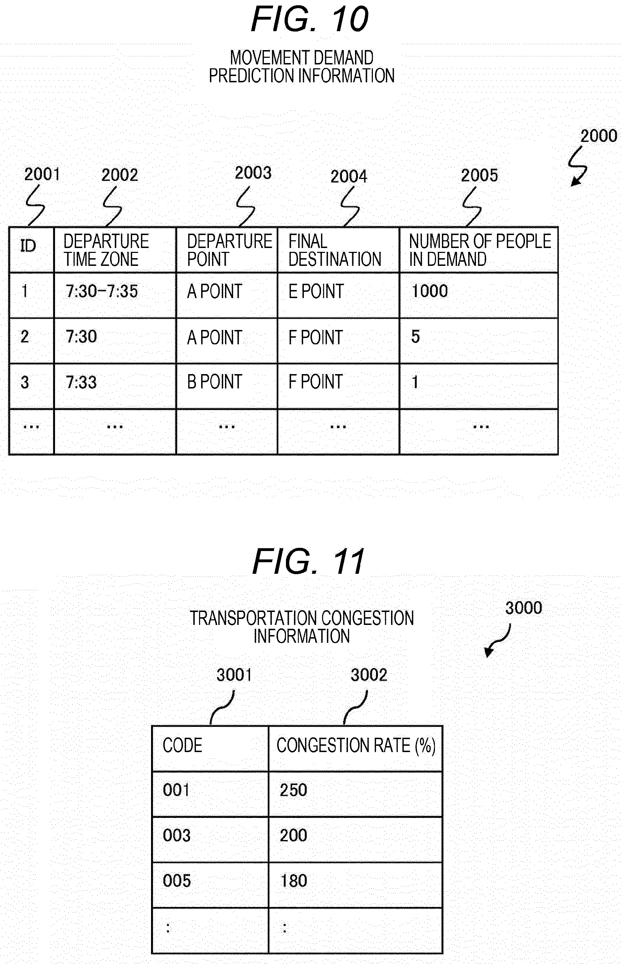

FIG. 10 illustrates a configuration example of the movement demand prediction information 2000. The movement demand prediction information 2000 is configured as a data table having a plurality of records. Each record includes items of ID 2001, a departure time zone 2002, a departure place 2003, a final destination 2004, and the number of people in demand 2005.

The ID 2001 stores a code for uniquely identifying each record stored in the movement demand prediction information 2000. The departure time zone 2002 stores time zones in which moving persons (passengers) corresponding to the movement demand identified by the ID 2001 start moving. The departure place 2003 stores point at which moving persons corresponding to the movement demand identified by the ID 2001 start moving. The final destination 2004 stores points at which the moving persons corresponding to the movement demand identified by the ID 2001 end moving. The departure place 2003 and the final destination 2004 are represented by the points defined in the transportation service plan information 1000. The number of people in demand 2005 stores the number of moving persons corresponding to the movement demand identified by the ID 2001. In the example of FIG. 10, the movement demand specified by the ID "1" indicates that it is predicted that 1000 people will go from point A to point E between "7:30 to 7:35".

The transportation service congestion information 3000 is information defining a predicted congestion rate for each transportation service defined by the transportation service plan information 1000, and as illustrated in FIG. 11, and it can include an identification code 3001 for uniquely identifying a transportation service and a predicted value of the congestion rate 3002 of the transportation service. The congestion rate of a transportation service may be recorded as a congestion rate between stations in the case of a railway, or a congestion rate between stops in the case of a route bus. The transportation service congestion information 3000 is calculated by the congestion prediction unit 131 of the congestion prediction device 130 and transmitted to the traffic demand prediction device 150 via the communication unit 132.

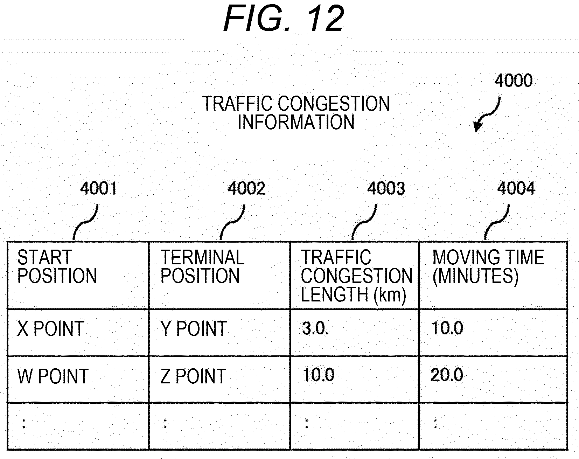

The traffic congestion information 4000 is information defining current traffic congestion status and a predicted value of future traffic congestion status, for example, as illustrated in FIG. 12, and it can include a start position 4001 of traffic congestion information, a position information to specify an end position 4002, a predicted value of a congestion length 4003 from a start point to an end point, and a predicted value of a required movement time 4004 from a start point to an end point. The traffic congestion information 4000 is calculated by the traffic congestion prediction unit 141 of the traffic congestion prediction device 140 and is transmitted to the traffic demand prediction device 150 via the communication unit 142.

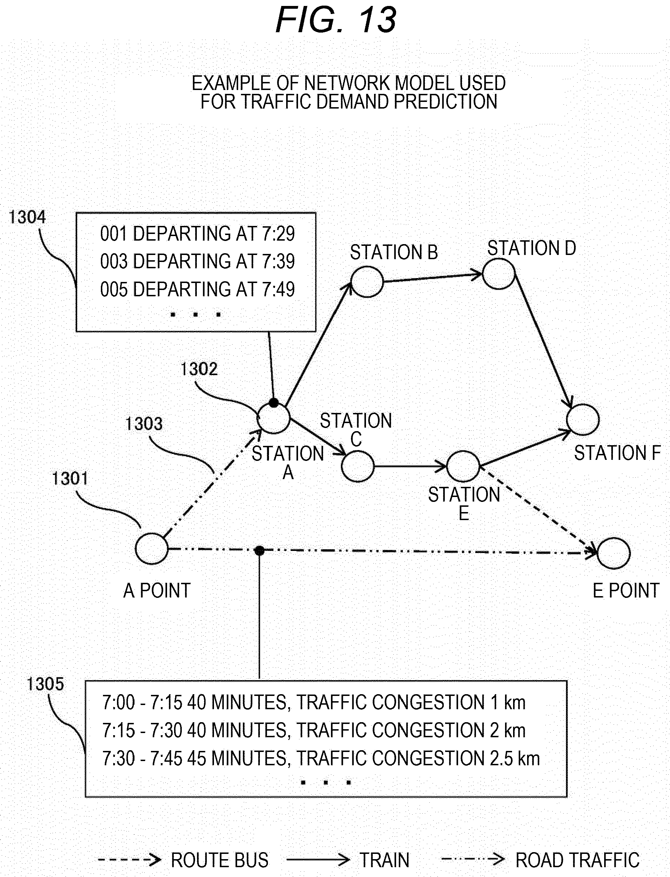

Next, a network model (route model) used by the traffic demand prediction device 150 according to the present embodiment will be described. An example of this network model is illustrated in FIG. 13. This network model models and expresses a moving route from a departure place to a final destination set in the prediction target area and a transportation means to be used. As illustrated in FIG. 13, the network is represented by connecting nodes representing points in the prediction target area with lines (links) representing transportation means that can be selected between the nodes. The nodes represent either a departure point, a final destination point, or a passing point included in the moving route.

When creating this network model, points (stations, stops, etc.) accessible to each transportation service defined in the transportation service plan information 1000 stored in the storage unit 157 of the traffic demand prediction device 150, a departure place and a final destination of the movement demand defined in the movement demand prediction information 2000, and a passing place if set are all represented as nodes. Furthermore, if a transportation service is defined between the nodes, a link representing the transportation service is set (third route). In addition, links (first and second routes) are created which represent movement by road traffic (cars, taxis, etc.) between the nodes of each of a departure point and a final destination of the movement demand defined in the movement demand prediction information 2000, a transportation service accessible point nearest to the departure point of the movement demand, a transportation service accessible point nearest to the final destination of the movement demand.

In addition, in the node created based on the record stored in the transportation service plan information 1000, information (code 1304 in FIG. 13) of the transportation service that leaves the accessible point corresponding to the corresponding node is set. Further, in the link representing the road traffic, a traffic congestion occurrence status stored in the traffic congestion information 4000 and a time required for passing the traffic (symbol 1305 in FIG. 13) are set.

FIG. 13 indicates a network model created in consideration of the movement demand indicated by the top record of the movement demand prediction information 2000 illustrated in FIG. 10, about the network model created using record examples of the transportation service plan information 1000 illustrated in FIG. 9. The points indicated in the transportation service plan information 1000 of FIG. 9 are represented as nodes 1302 like the stations A to F, and are connected by links 1303 according to the transportation services provided between the nodes 1302. In addition, the node 1301 corresponding to point A to point E that are a departure place and a final destination of the movement demand is created, and a link representing road traffic between a nearest station and a departure point (point A) and final destination (point E) of each point is created. As for the route of road traffic connecting the departure place, and respective nearest stations, and a route of road traffic connecting the departure place and the final destination, a large number of options can actually be considered. In the present embodiment, in order to shorten the time required for the traffic demand prediction process, one route is set which is expected that the required time is the shortest by comparing in advance the required times of a plurality of routes of road traffic connecting the respective nodes. Thereby, a calculation time of the moving route search can be shortened.

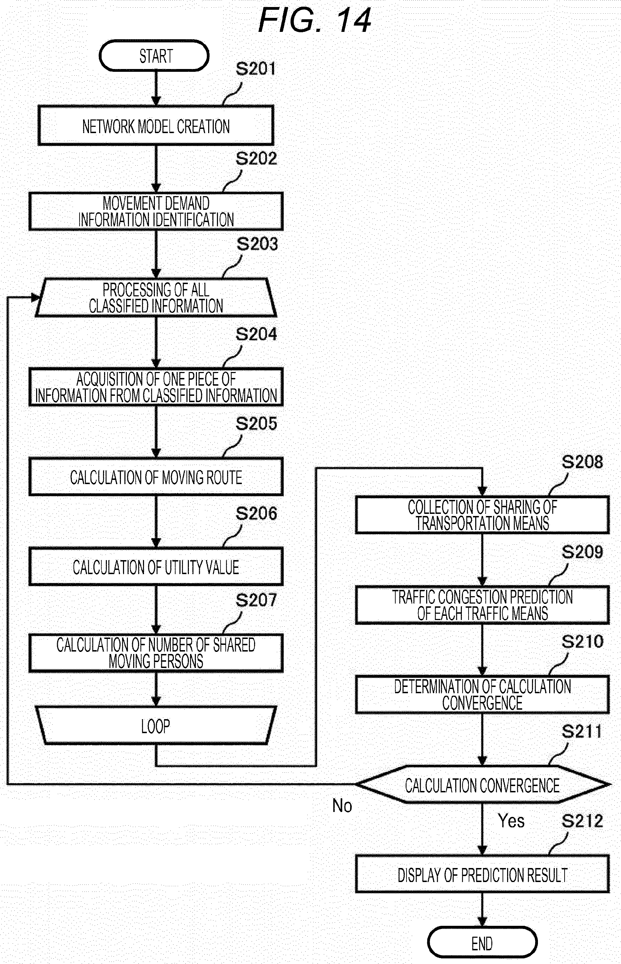

Next, traffic demand prediction processing by the traffic demand prediction device 150, which is executed using the network model described above, will be described. FIG. 14 shows an example of a processing flow of traffic demand prediction processing according to the present embodiment. The symbol S in the drawing represents a step.

The network model creation unit 1541 reads the transportation service plan information 1000 and the movement demand prediction information 2000 stored in the storage unit 157, and a network model which represents each transportation service defined in the transportation service plan information 1000, a departure place and a destination place of the movement demand is created as described above (S201). In the example of the present embodiment, it is assumed that the network model illustrated in FIG. 13 is created. Note that, the processing start timing is triggered such as by power on of the traffic demand prediction device 150 and the update timing of movement demand information.

Next, the movement demand information classification unit 1542 reads the movement demand prediction information 2000 stored in the storage unit 157, and classifies a plurality of acquired records based on a departure place and a destination place, and a departure time zone (S202).

Next, the moving route calculation unit 1543 repeatedly executes the processing of S204 to S207 for all of a plurality of movement demands classified by the movement demand information classification unit 1542 (S203).

First, the moving route calculation unit 1543 acquires one unprocessed movement demand among the movement demands classified by the movement demand information classification unit 1542 (S204) and extracts all of nodes included in the route connecting a departure place and a destination place of the acquired movement demand and links connecting the nodes from the network model created in S201 (S205).

Among the links included in the moving route extracted by the moving route calculation unit 1543, about the link whose transportation means is public transportation, the utility value calculation unit 1544 determines a transportation service to which a passenger constituting the movement demand to be processed gets on on the basis of the transportation service congestion information 3000 and the traffic congestion information 4000 stored in the storage unit 157 and uses the transportation service plan information 1000 for the determined transportation service to calculate the required time for moving between movement sections represented by each link. The utility value calculation unit 1544 calculates an evaluation index of each link in consideration of comparison elements such as the calculated required time, the congestion degree (riding rate) of the transportation service and the cost (fare). Among the comparison elements required for calculating the evaluation index, fixed values such as the cost (fare) for transportation convenience and the transfer cost can be stored in advance in the transportation service plan information 1000 of FIG. 9.

Similarly, the utility value calculation unit 1544 calculates an evaluation index of the links based on the required time and the traffic congestion degree defined by the traffic congestion information 4000 stored in the storage unit 157 for links in which a transportation means is road traffic among links included in the moving route extracted by the moving route calculation unit 1543. The utility value calculation unit 1544 calculates a utility value of the moving route based on the calculated evaluation index of each link (S206).

The utility value for each moving route can be calculated as follows, for example, using the required time and moving cost in the case of using the moving route. As apparent from these mathematical formulas, a utility value $U_i$ calculated for a moving route $i$ decreases as the moving time for the moving route $i$ increases and as the moving cost increases. In other words, the value of the utility value $U_i$ increases as a user may want to select the moving route in consideration of convenience. A congestion degree by the congestion prediction device 130 and a traffic congestion degree by the traffic congestion prediction device 140 can be added to the movement cost and incorporated in the evaluation by using a function that converts the degrees each into an expense.

[Mathematical Formula 1]

$$\text{Utility value of route } i \; U_i = e^{-ui}$$

$$u_i = a_{i1}t_i + a_{i2}c_i + a_{in}$$

$a_{jj}$:     Parameter
$t_i$:     Movement time of route $i$
$c_i$:     Movement cost of route $i$

Next, using the utility value of each moving route calculated by the utility value calculation unit 1544, the shared moving person calculation unit 1545 calculates the sharing of the number of moving persons using each moving route (S207). The sharing of the number of moving persons can be calculated using, for example, a multinomial logit model in which selection probabilities are calculated based on utility values as follows. That is, the sharing of the number of moving persons for a plurality of moving routes is proportionally distributed according to the utility value Ui.

$$[\text{Mathematical Formula 2}]$$

$$\text{Sharing rate of route } i \; \Pr_i = \frac{U_i}{\sum_k U_k}$$

$k$:     Set of moving route for each movement demand

If the process has been executed for all the movement demands, that is, if the loop of S203 is completed, the moving route calculation unit 1543 proceeds to the process of S208. The prediction device cooperation unit 155 collects the number of moving persons on each moving route with respect to each movement demand calculated by the shared moving person calculation unit 1545 for each time zone and transportation means (S208).

The prediction device cooperation unit 155 transmits the number of moving persons collected in S208 to the congestion prediction device 130 or the traffic congestion prediction device 140 for the corresponding transportation means, and receives the prediction results calculated in each (S209).

The calculation convergence calculation unit 156 determines whether the calculation has converged based on the congestion degree and the traffic congestion degree received by the prediction device cooperation unit 155 (S210). In the first calculation, the congestion degree/traffic congestion degree set in advance and the congestion degree/traffic congestion degree acquired this time are respectively compared as an attribute of the moving route. In the second and subsequent calculations, the congestion degree/traffic congestion degree acquired last time are compared with the congestion degree/traffic congestion degree acquired this time, respectively. The determination as to whether the calculation has converged (whether or not a predetermined calculation end condition is satisfied) can be made, for example, according to the following criteria.

Determination method 1: When the difference between the congestion degree/traffic congestion degree is equal to or less than a predetermined threshold, it is determined that the calculation is converged.

Determination method 2: When the difference of sharing ratios between the number of shared moving persons of each moving route or the sharing ratio of the total number of moving persons is equal to or less than a predetermined threshold, it is determined that the calculation is converged.

The determination of the calculation convergence is not limited to the above method. Among a plurality of moving routes, in the case where the difference of such as the number of shared moving persons is less than or equal to a predetermined value for the main moving route with the largest number of shared moving persons, it is possible to adopt an appropriate determination method such as assuming that the calculation has converged.

Next, when the calculation convergence calculation unit 156 determines that the determination result of S211 is not converged (S211, No), S203 is performed again, and the processing of S204 to S207 for each movement demand is repeatedly executed. In the case where the determination result in S211 is convergence (S211, Yes), the calculation convergence calculation unit 156 represents, as traffic demand prediction information, information obtained by collecting the number of moving persons of each moving route for each movement demand calculated by the shared moving person calculation unit 1545 in S208 for each time zone and traffic means to a user through the output unit 152, the output unit 162 of the passenger terminal device 160, the output unit 113 of the transportation planning device 110 and ends the processing (S212). A transportation company such as a railway company, a route bus company, or a taxi company can receive traffic demand prediction information as data from the traffic demand prediction device 150 and use it for planning a transportation plan at each company.

Note that, in the present embodiment, when it is determined in S211 that the calculation is not converged, the moving route itself for each movement demand is recalculated and reviewed. On the other hand, if it is possible to fix and use the moving route that has been calculated once for one movement demand, it is also possible to return the processing to the utility value calculation of each moving route in S206.

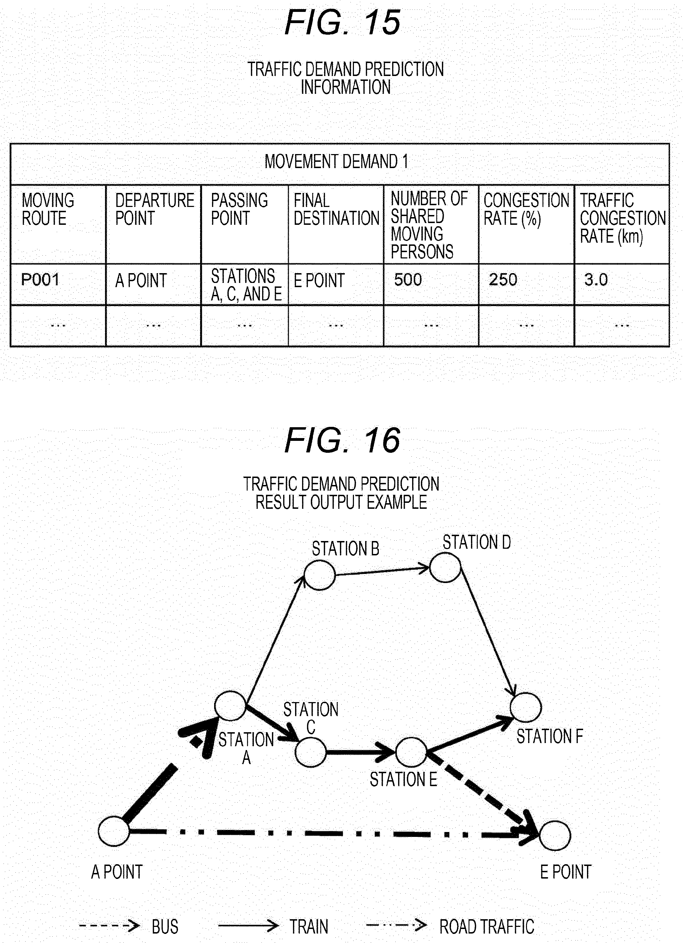

FIG. 15 illustrates a display example of traffic demand prediction information. In the output of traffic demand prediction results, data such as the number of shared moving persons for each moving route, a sharing rate, a congestion degree, a travel congestion degree, a required time, and a utility value may be indicated numerically as in the example of FIG. 15 or may be displayed graphically on the network model as illustrated in FIG. 16. In the example of FIG. 16, the expression of increasing the width of the link is adopted as the number of shared moving persons increases in the moving route such that the amount of the traffic demand can be recognized at a glance. In addition to this, it is possible to change the display form in any way such as displaying the congestion rate and the traffic congestion degree by color coding at predetermined time intervals.

According to the traffic demand prediction device 150 of the first embodiment described above, it is possible to easily provide timely use of traffic demand prediction information for the public transportation facility and road traffic in the prediction target area. A business operator such as a public transportation organization can adjust the on-demand transportation capacity using the provided traffic demand prediction information, and can improve the convenience of a user. In addition, since each passenger can grasp the concentration of moving persons in the moving route and the like in a timely manner, it becomes possible to select an appropriate moving route from the viewpoint of arrival time, comfort and the like.

Second Embodiment

Next, a traffic demand prediction device 150 according to a second embodiment of the present invention will be described. In the first embodiment, a configuration example has been indicated in which the number of shared moving persons for each transportation means is calculated, and the congestion/traffic congestion prediction device for each transportation means is made to be cooperated. In the present embodiment, a configuration example for accelerating the convergence of calculation with respect to the traffic demand prediction process of the first embodiment will be described. Note that, in the following, for the sake of simplicity, only portions different in configuration from the first embodiment will be described. The same reference numerals as in the first embodiment denote the same parts in the second embodiment.

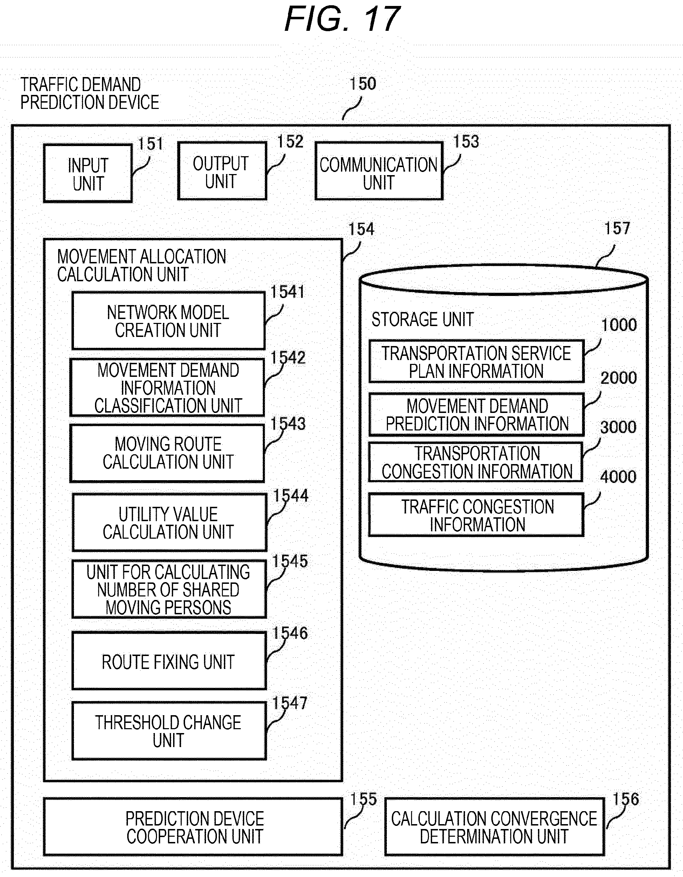

FIG. 17 is a diagram illustrating a configuration example of the traffic demand prediction device 150 in the second embodiment. As illustrated in FIG. 17, in the traffic demand prediction device 150 of the present embodiment, a route fixing unit 1546 and a threshold changing unit 1547 are added in the movement allocation calculation unit 154.

The route fixing unit 1546 has a function of fixing a moving route for which the difference is reduced to some extent in the comparison of the calculation results such that the number of shared moving persons does not change thereafter.

The threshold changing unit 1547 has a function of changing a threshold used by the route fixing unit 1546 such that the calculation converges in a situation where calculations cannot be expected to converge within a practical range in terms of calculation required time etc. even if the calculations are repeated.

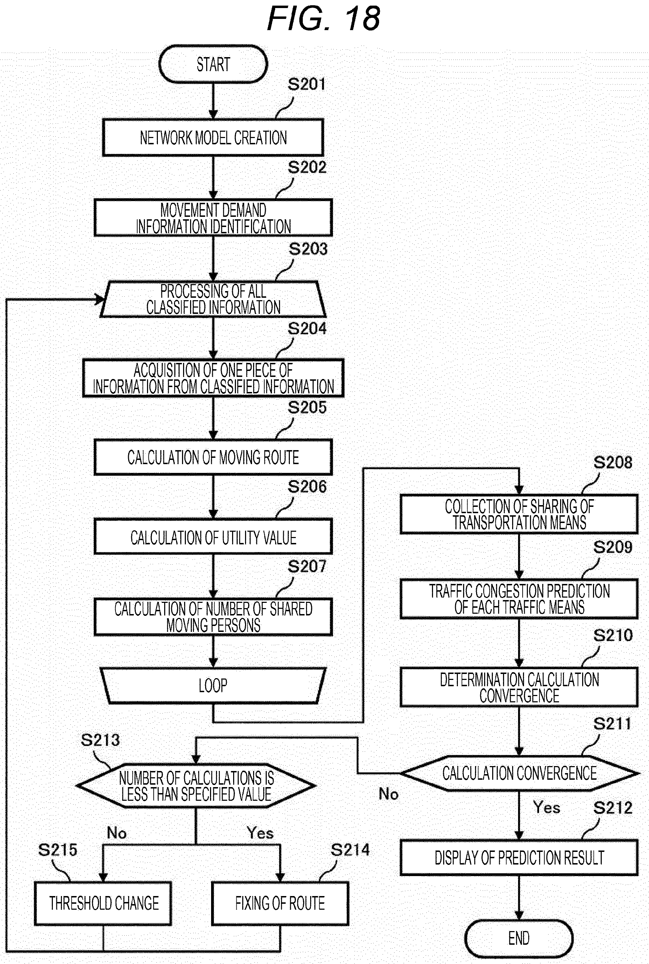

FIG. 18 is a diagram illustrating an example of a processing flow of traffic demand prediction processing by the traffic demand prediction device 150 of the present embodiment, which corresponds to FIG. 14 of the first embodiment. In this processing flow example, the processing steps of S201 to S212 are the same as in the first embodiment. The second embodiment is different from the first embodiment in the processing when it is determined in S211 that the calculation does not converge.

If it is determined in S211 that the calculation has not converged (S211, No), the calculation convergence determination unit 156 determines whether or not the number of calculations is less than the specified value at that time (S213), if it is determined that the number of calculations is less than the specified value, S214 is executed (S213, Yes), and if it is determined that it is equal to or greater than the specified value, S215 is executed (S213, No).

In S214, the route fixing unit 1546 fixes such that the number of shared moving persons does not change with regard to between nodes for which the difference of the calculation convergence determination value calculated by the calculation convergence determination unit 156 from the value of the previous calculation is equal to or less than a threshold or the movement demand where a difference of the number of shared moving persons of the previous number is equal to or less than a threshold or both of them. The result of fixing the number of shared moving persons is presented to the user via the output unit 152 together with the network model created in S201, as described later.

On the other hand, in S215, the threshold changing unit 1547 executes an operation to increase the threshold used by the calculation convergence determination unit 156, with respect to between nodes where, even if the calculation is repeated a fixed number of times (specified value) or more, the difference between the calculation convergence determination value calculated by the calculation convergence determination unit 156 and the value of the previous calculation continues to be a predetermined value or more, or the movement demand where the difference with the previous time of shared moving persons continues to be more than a threshold. The threshold used for the determination in this case is presented to the user via the output unit 152 together with the network model created in S201, as described later.

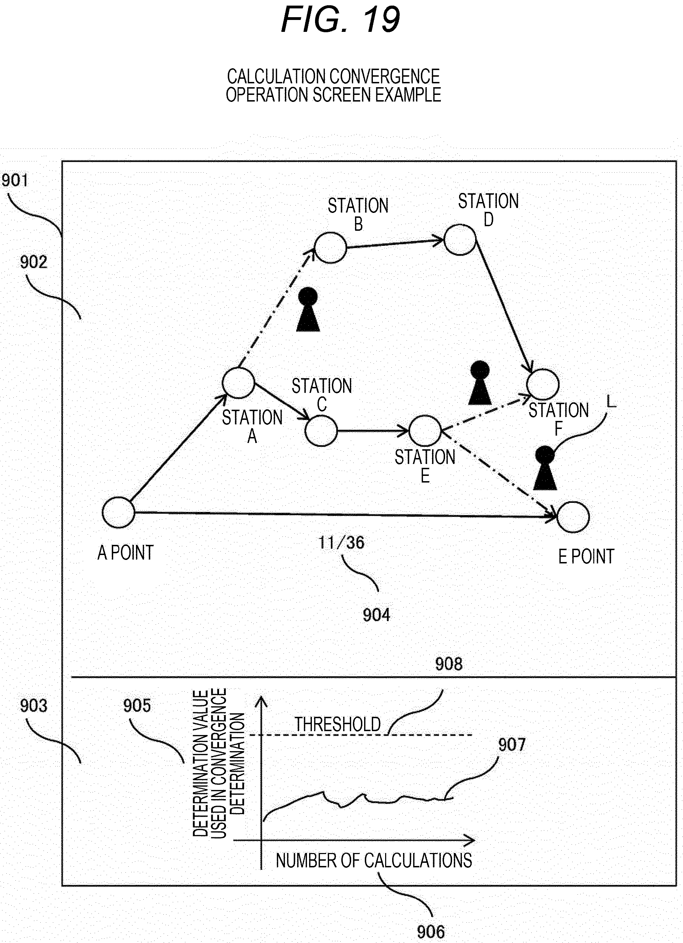

FIG. 19 shows an example of a screen displaying inter-nodes or movement demand (corresponding to moving persons) fixed by the route fixing unit 1546 and a threshold used for determining between nodes to be fixed or movement demand.

Reference numeral 901 denotes a screen frame, and reference numeral 902 denotes a first display area displaying a network model created in S201. Reference numeral 903 denotes a second display area for displaying a graph representing the transition of the determination value of calculation convergence for the link selected by the user among the links set in the network model displayed in the first display area 902.

In the network model displayed in the first display area 902, a fixed section or movement demand and a non-fixed section or movement demand are displayed so as to be distinguishable. For example, in the example of FIG. 19, a fixed section or movement demand is denoted by a dashed-dotted line and a symbol L indicating to be fixed, and non-fixed section or movement demand is denoted by a solid line. Reference numeral 904 denotes the "current value/fixed target threshold" for the determination value of calculation convergence of each link, and in the example of FIG. 19, regarding the threshold for the link connecting point A and point E directly with road traffic, calculations are performed for eleven times for a threshold 36.

In the graph displayed in the second display area 903, the vertical axis 905 represents the determination value used in the convergence determination of the calculation in S211, and the horizontal axis 906 represents the number of calculations. Reference numeral 907 is a curve representing the transition of the determination value of the calculation convergence for each number of calculations. Reference numeral 908 represents a threshold for determining whether to fix the displayed section.

A user of the traffic demand prediction device 150 can be configured to be able to change the threshold that is a determination value of calculation convergence via a screen illustrated in FIG. 19 and the input unit 151. For example, in the example of FIG. 19, when operating on a link of road traffic that directly connects the point A and point E, a graph concerning the corresponding link is displayed in the second display area 903 by clicking the corresponding link in the first display area 902, and the threshold can be intuitively changed by dragging the threshold 908. It is obvious that other methods may be used, such as displaying an input field where the value of the threshold 908 can be directly specified.

As described above, according to the traffic demand prediction device 150 according to the embodiment of the present invention, it is possible to timely carry out traffic demand prediction with regard to a plurality of moving means constituting a moving route, while considering temporal demand fluctuation of each.

Note that, the technical scope of the present invention is not limited to the above embodiment, and other modifications, applications and the like are also included in the scope described in claims.

**Claims**

**1.** A traffic demand prediction method, wherein
a computer provided with a processor and a memory:

acquires transportation service plan information which is information regarding an operation plan and operation status of transportation services operated by public transportation in a prediction target area, movement demand prediction information which is prediction information regarding movement demand between points in the prediction target area, transportation service congestion information which is information regarding a congestion degree of the transportation services, and traffic congestion information which is information regarding congestion state of road traffic in the prediction target area;
creates a route model between two points in the prediction target area including a first route which is a route from each point to a nearest boarding point of public transportation, a second route which is a route traveling by public transportation between the nearest boarding points, and a third route which is a route connecting by means of pre-set road traffic between the above-described two points, between boarding points of public transportation included in the second route, or between any one of the two points and the boarding point of public transportation included in the second route;
in the route model between a departure point and a destination point of the movement demand included in the acquired movement demand prediction information, extracts a moving route from the departure point to the destination point from a combination of the first route to the third route;
for the extracted moving route, calculates a congestion degree and congestion state regarding transportation services and road traffic included in the moving route from the transportation service congestion information and traffic congestion information, calculates a utility value for each moving route based on an evaluation index including the congestion degree or traffic congestion state; and
allocates the number of moving persons from the departure point to the destination point acquired from the movement demand prediction information to each moving route as the number of shared moving persons based on the utility value for the moving route, and collects and outputs the number of shared moving persons for each public transportation included in each moving route.

**2.** The traffic demand prediction method according to claim 1, comprising:
determining whether or not a predetermined calculation end condition regarding an attribute of the moving route is satisfied, by acquiring the transportation service congestion information and the traffic congestion information recalculated based on the number of shared moving persons collected for each public transportation, outputting the number of shared moving persons, the transportation service congestion information, and the traffic congestion information as traffic demand prediction information if it is determined that the predetermined calculation end condition is satisfied, and acquiring the transportation service congestion information and the traffic congestion information recalculated based on the latest number of shared moving persons to execute a process of determining whether or not the predetermined calculation end condition is satisfied if it is determined that the predetermined calculation end condition is not satisfied.

**3.** The traffic demand prediction method according to claim 1, wherein the route model is graphically displayed, and the transportation service congestion information and the traffic congestion information are superimposed and displayed graphically on the route model.

**4.** The traffic demand prediction method according to claim 2, comprising executing a process of fixing such that the number of shared moving persons does not change regarding a section in the moving route determined that a difference from the previous calculation has come to be equal to or less than a predetermined threshold with respect to a determination value of the calculation end condition regarding the attribute of the moving route or the movement demand determined that a difference from the previous calculation of the number of shared moving persons on the moving route has come to be equal to or less than a predetermined threshold, or both of them.

**5.** The traffic demand prediction method according to claim 2, comprising increasing a threshold used to determine a section or movement demand in which a determination value regarding the attribute of the moving route is not less than a predetermined threshold, if it is determined that the number of times of calculation of the transportation service congestion information and the traffic congestion information has come to be equal to or greater than a predetermined specified value.

**6.** The traffic demand prediction method according to claim 4, wherein the section or movement demand fixed so as to be excluded from the calculation of the number of shared moving persons is graphically displayed by being superimposed on the process model.

**7.** The traffic demand prediction method according to claim 4, wherein a threshold for determining whether or not the attribute relating to the moving route satisfies the predetermined calculation end condition is configured to be interactively changeable on a display screen of the route model.

**8.** A traffic demand prediction device provided with a processor and a memory, the traffic demand prediction device comprising:

a processing unit that acquires transportation service plan information, which is information regarding an operation plan and operation status of transportation services operated by public transportation in a prediction target area, movement demand prediction information which is prediction information regarding movement demand between points in the prediction target area, transportation service congestion information which is information regarding a congestion degree of the transportation services, and traffic congestion information which is information regarding congestion state of road traffic in the prediction target area;
a processing unit that creates a route model between two points in the prediction target area including a first route which is a route from each point to the nearest boarding point of public transportation, a second route which is a route traveling by public transportation between the nearest boarding points, and a third route which is a route connecting by means of pre-set road traffic between the above-described two points, between boarding points of public transportation included in the second route, or between any one of the two points and the boarding point of public transportation included in the second route;
a processing unit that, in the route model between a departure point and a destination point of the movement demand included in the acquired movement demand prediction information, extracts a moving route from the departure point to the destination point from a combination of the first path to the third path;
a processing unit, for the extracted moving route, calculates a congestion degree and congestion state regarding transportation services and road traffic included in the moving route from the transportation service congestion information and traffic congestion information, calculates a utility value for each moving route based on the evaluation index including the congestion degree or traffic congestion state; and

a processing unit that allocates the number of moving persons from the departure point to the destination point obtained from the movement demand prediction information to each moving route as the number of shared moving persons based on the utility value for the moving route, and collects and outputs the number of shared moving persons for each public transportation included in each moving route.

9. The traffic demand prediction device according to claim 8, wherein the traffic demand prediction device is configured to:
determine whether or not a predetermined calculation end condition regarding an attribute of the moving route is satisfied, by acquiring the transportation service congestion information and the traffic congestion information recalculated based on the number of shared moving persons collected for each public transportation, output the number of shared moving persons, the transportation service congestion information, and the traffic congestion information as traffic demand prediction information if it is determined that the predetermined calculation end condition is satisfied, and acquire the transportation service congestion information and the traffic congestion information recalculated based on the latest number of shared moving persons to execute a process of determining whether or not the predetermined calculation end condition is satisfied if it is determined that the predetermined calculation end condition is not satisfied.

10. The traffic demand prediction device according to claim 8, wherein the route model is graphically displayed, and the transportation service congestion information and the traffic congestion information are superimposed and displayed graphically on the route model.

11. The traffic demand prediction device according to claim 9, wherein the traffic demand prediction device is configured to execute a process of fixing such that the number of shared moving persons does not change regarding a section in the moving route determined that a difference from the previous calculation has come to be equal to or less than a predetermined threshold with respect to a determination value of the calculation end condition regarding the attribute of the moving route, or the movement demand determined that a difference from the previous calculation of the number of shared moving persons on the moving route has come to be equal to or less than a predetermined threshold, or both of them.

12. The traffic demand prediction device according to claim 9, wherein the traffic demand prediction device increases a threshold used to determine a section or movement demand in which a determination value regarding the attribute of the moving route is not less than a predetermined threshold, if it is determined that the number of times of calculation of the transportation service congestion information and the traffic congestion information has come to be equal to or greater than a predetermined specified value.

13. The traffic demand prediction device according to claim 11, wherein the section or movement demand fixed so as to be excluded from the calculation of the number of shared moving persons is graphically displayed by being superimposed on the process model.

14. The traffic demand prediction device according to claim 11, wherein a threshold for determining whether or not the attribute relating to the moving route satisfies the predetermined calculation end condition is configured to be interactively changeable on a display screen of the route model.

# FIG. 1

100

150 — TRAFFIC DEMAND PREDICTION DEVICE

110 — TRANSPORTATION PLANNING DEVICE

140 — TRAFFIC CONGESTION PREDICTION DEVICE

120 — MOVEMENT DEMAND PREDICTION DEVICE

N

130 — CONGESTION PREDICTION DEVICE

160 — PASSENGER TERMINAL DEVICE

...

160 — PASSENGER TERMINAL DEVICE

# FIG. 2

10

| 11 |
| --- |
| PROCESSOR (CPU) |

| 12 |
| --- |
| MAIN STORAGE DEVICE (MEMORY) |

| 13 |
| --- |
| AUXILIARY STORAGE DEVICE |

| 14 |
| --- |
| INPUT DEVICE |

| 15 |
| --- |
| OUTPUT DEVICE |

| 16 |
| --- |
| COMMUNICATION DEVICE |

# FIG. 3

TRANSPORTATION
PLANNING DEVICE                    110

| 111 |
| --- |
| TRANSPORTATION PLANNING UNIT |

| 112 |
| --- |
| COMMUNICATION UNIT |

| 113 |
| --- |
| OUTPUT UNIT |

# FIG. 4

MOVEMENT DEMAND
PREDICTION DEVICE                    120

MOVEMENT DEMAND
PREDICTION UNIT                      121

COMMUNICATION
UNIT                                 122

# FIG. 5

CONGESTION PREDICTION
DEVICE                               130

CONGESTION
PREDICTION UNIT                      131

COMMUNICATION
UNIT                                 132

# FIG. 6

TRAFFIC CONGESTION
PREDICTION DEVICE                    140

TRAFFIC
CONGESTION
PREDICTION UNIT                      141

COMMUNICATION
UNIT                                 142

# FIG. 7

PASSENGER TERMINAL DEVICE — 160

INPUT UNIT — 161

OUTPUT UNIT — 162

COMMUNICATION UNIT — 163

# FIG. 8

TRAFFIC DEMAND
PREDICTION DEVICE

150

**INPUT UNIT** 151

**OUTPUT UNIT** 152

**COMMUNICATION UNIT** 153

**MOVEMENT ALLOCATION CALCULATION UNIT** 154

NETWORK MODEL CREATION UNIT 1541

MOVEMENT DEMAND INFORMATION CLASSIFICATION UNIT 1542

MOVING ROUTE CALCULATION UNIT 1543

UTILITY VALUE CALCULATION UNIT 1544

UNIT FOR CALCULATING THE NUMBER OF SHARED MOVING PERSONS 1545

**STORAGE UNIT** 157

TRANSPORTATION SERVICE PLAN INFORMATION 1000

MOVEMENT DEMAND PREDICTION INFORMATION 2000

TRANSPORTATION CONGESTION INFORMATION 3000

TRAFFIC CONGESTION INFORMATION 4000

**PREDICTION DEVICE COOPERATION UNIT** 155

**CALCULATION CONVERGENCE DETERMINATION UNIT** 156

# FIG. 9

TRANSPORTATION SERVICE PLAN
INFORMATION

1000

| CODE | TRANSPORTATION FACILITY | POINT | ARRIVAL TIME | DEPARTURE TIME | POINT | ARRIVAL TIME | DEPARTURE TIME |
|------|------------------------|-------|--------------|----------------|-------|--------------|----------------|
| 001 | TRAIN | STATION A | 7:29 | 7:30 | STATION B | 7:35 | 7:36 |
| 003 | TRAIN | STATION A | 7:39 | 7:40 | STATION B | 7:45 | 7:46 |
| 005 | TRAIN | STATION A | 7:49 | 7:50 | STATION C | 7:55 | 7:56 |
| ... | ... | ... | ... | ... | ... | ... | ... |

1001 1002 1003 1004 1005 1003 1004 1005

| POINT | ARRIVAL TIME | DEPARTURE TIME | POINT | ARRIVAL TIME | DEPARTURE TIME |
|-------|--------------|----------------|-------|--------------|----------------|
| STATION D | 7:46 | 7:47 | STATION F | 7:55 | — |
| STATION D | 7:56 | 7:57 | STATION F | 8:05 | — |
| STATION E | 8:06 | 8:14 | STATION F | 8:05 | — |
| ... | ... | ... | ... | ... | ... |

1003 1004 1005 1003 1004 1005

# FIG. 10

MOVEMENT DEMAND
PREDICTION INFORMATION

2000

| 2001 | 2002 | 2003 | 2004 | 2005 |
| --- | --- | --- | --- | --- |
| ID | DEPARTURE TIME ZONE | DEPARTURE POINT | FINAL DESTINATION | NUMBER OF PEOPLE IN DEMAND |
| 1 | 7:30-7:35 | A POINT | E POINT | 1000 |
| 2 | 7:30 | A POINT | F POINT | 5 |
| 3 | 7:33 | B POINT | F POINT | 1 |
| ... | ... | ... | ... | ... |

# FIG. 11

TRANSPORTATION CONGESTION
INFORMATION

3000

| 3001 | 3002 |
| --- | --- |
| CODE | CONGESTION RATE (%) |
| 001 | 250 |
| 003 | 200 |
| 005 | 180 |
| : | : |

# FIG. 12

TRAFFIC CONGESTION
INFORMATION          4000

| START POSITION | TERMINAL POSITION | TRAFFIC CONGESTION LENGTH (km) | MOVING TIME (MINUTES) |
|---|---|---|---|
| X POINT | Y POINT | 3.0. | 10.0 |
| W POINT | Z POINT | 10.0 | 20.0 |
| : | : | : | : |

4001          4002          4003          4004

# FIG. 13

EXAMPLE OF NETWORK MODEL USED
FOR TRAFFIC DEMAND PREDICTION

1304

001 DEPARTING AT 7:29
003 DEPARTING AT 7:39
005 DEPARTING AT 7:49
・・・

STATION B    STATION D

STATION F

1302

1303

STATION C

STATION A

1301

STATION E

A POINT

E POINT

1305

7:00 - 7:15 40 MINUTES, TRAFFIC CONGESTION 1 km
7:15 - 7:30 40 MINUTES, TRAFFIC CONGESTION 2 km
7:30 - 7:45 45 MINUTES, TRAFFIC CONGESTION 2.5 km
・・・

- - - -> ROUTE BUS    ——→ TRAIN    - - · - -> ROAD TRAFFIC

# FIG. 14

```
                    ┌──────────┐
                    │  START   │
                    └────┬─────┘      S201
                         │
                         ▼
        ┌────────────────────────────────┐
        │    NETWORK MODEL CREATION       │
        └────────────────┬───────────────┘
                         │              S202
                         ▼
        ┌────────────────────────────────┐
        │       MOVEMENT DEMAND           │
        │   INFORMATION IDENTIFICATION    │
        └────────────────┬───────────────┘
                         │              S203
                         ▼
        ╱────────────────────────────────╲
        │      PROCESSING OF ALL          │
        │    CLASSIFIED INFORMATION       │
        └────────────────┬───────────────┘
                         │              S204
                         ▼
        ┌────────────────────────────────┐
        │   ACQUISITION OF ONE PIECE OF   │
        │ INFORMATION FROM CLASSIFIED INFORMATION │
        └────────────────┬───────────────┘
                         │              S205
                         ▼
        ┌────────────────────────────────┐
        │    CALCULATION OF MOVING ROUTE  │
        └────────────────┬───────────────┘
                         │              S206
                         ▼
        ┌────────────────────────────────┐
        │   CALCULATION OF UTILITY VALUE  │
        └────────────────┬───────────────┘
                         │              S207
                         ▼
        ┌────────────────────────────────┐
        │ CALCULATION OF NUMBER OF SHARED │
        │        MOVING PERSONS           │
        └────────────────┬───────────────┘
                         │
                         ▼
        ╲────────────────────────────────╱
        │             LOOP                │
        ╱────────────────────────────────╲
```

S208 — COLLECTION OF SHARING OF TRANSPORTATION MEANS

S209 — TRAFFIC CONGESTION PREDICTION OF EACH TRAFFIC MEANS

S210 — DETERMINATION OF CALCULATION CONVERGENCE

S211 — CALCULATION CONVERGENCE — No / Yes

S212 — DISPLAY OF PREDICTION RESULT

END

# FIG. 15

TRAFFIC DEMAND PREDICTION
INFORMATION

| MOVEMENT DEMAND 1 | | | | | | |
|---|---|---|---|---|---|---|
| MOVING ROUTE | DEPARTURE POINT | PASSING POINT | FINAL DESTINATION | NUMBER OF SHARED MOVING PERSONS | CONGESTION RATE (%) | TRAFFIC CONGESTION RATE (km) |
| P001 | A POINT | STATIONS A, C, AND E | E POINT | 500 | 250 | 3.0 |
| ... | ... | ... | ... | ... | ... | ... |

# FIG. 16

TRAFFIC DEMAND PREDICTION
RESULT OUTPUT EXAMPLE

- - - - > BUS    ——————> TRAIN    — - - > ROAD TRAFFIC

# FIG. 17

TRAFFIC DEMAND
PREDICTION DEVICE

150

**INPUT UNIT** 151

**OUTPUT UNIT** 152

**COMMUNICATION UNIT** 153

154

**MOVEMENT ALLOCATION CALCULATION UNIT**

NETWORK MODEL CREATION UNIT 1541

MOVEMENT DEMAND INFORMATION CLASSIFICATION UNIT 1542

MOVING ROUTE CALCULATION UNIT 1543

UTILITY VALUE CALCULATION UNIT 1544

UNIT FOR CALCULATING NUMBER OF SHARED MOVING PERSONS 1545

ROUTE FIXING UNIT 1546

THRESHOLD CHANGE UNIT 1547

157

**STORAGE UNIT**

TRANSPORTATION SERVICE PLAN INFORMATION 1000

MOVEMENT DEMAND PREDICTION INFORMATION 2000

TRANSPORTATION CONGESTION INFORMATION 3000

TRAFFIC CONGESTION INFORMATION 4000

**PREDICTION DEVICE COOPERATION UNIT** 155

**CALCULATION CONVERGENCE DETERMINATION UNIT** 156

# FIG. 18

# FIG. 19

CALCULATION CONVERGENCE
OPERATION SCREEN EXAMPLE

## INTERNATIONAL SEARCH REPORT

| | International application No. |
|---|---|
| | PCT/JP2018/018595 |

### A. CLASSIFICATION OF SUBJECT MATTER
Int.Cl. G06Q10/04(2012.01)i, G01C21/26(2006.01)i, G08G1/00(2006.01)i

According to International Patent Classification (IPC) or to both national classification and IPC

### B. FIELDS SEARCHED

Minimum documentation searched (classification system followed by classification symbols)
Int.Cl. G06Q10/04, G01C21/26, G08G1/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2014/199503 A1 (HITACHI, LTD.) 18 December 2014, abstract, paragraphs [0017]–[0032], [0041], [0055]–[0061], fig. 13 & EP 3009324 A1, abstract, paragraphs [0019]–[0035], [0044], [0059]–[0065] & CN 105377664 A | 1–14 |
| A | JP 2016-80665 A (NAVITIME JAPAN CO., LTD.) 16 May 2016, entire text, all drawings (Family: none) | 1–14 |
| A | JP 2014-115956 A (TOYOTA MOTOR CORP.) 26 June 2014, entire text, all drawings & US 2016/0042639 A1 & WO 2014/091674 A1 & EP 2932488 A1 & CN 104838433 A | 1–14 |
| A | WO 2014/121329 A1 (UNIVERSITY OF TECHNOLOGY, SYDNEY) 14 August 2014, entire text, all drawings & AU 2014214534 A | 1–14 |

☐ Further documents are listed in the continuation of Box C.     ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 25 May 2018 (25.05.2018) | 05 June 2018 (05.06.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017125896 A
- JP 2001124569 A